(19) Europäisches Patentamt
European Patent Office
Office européen des brevets

(11) **EP 3 751 258 B1**

(12) **FASCICULE DE BREVET EUROPEEN**

(45) Date de publication et mention
de la délivrance du brevet:
**24.08.2022 Bulletin 2022/34**

(21) Numéro de dépôt: **20179388.2**

(22) Date de dépôt: **10.06.2020**

(51) Classification Internationale des Brevets (IPC):
**G01N 21/64** *(2006.01)* **G01N 21/77** *(2006.01)*
**G02B 1/00** *(2006.01)*

(52) Classification Coopérative des Brevets (CPC):
**G01N 21/645; G01N 21/7743; G02B 1/005**

(54) **DISPOSITIF ET PROCÉDÉ D'OBSERVATION D'UN ÉCHANTILLON FLUORESCENT**

VORRICHTUNG UND VERFAHREN ZUR BEOBACHTUNG EINER FLUORESZENTEN PROBE

DEVICE AND METHOD FOR OBSERVING A FLUORESCENT SAMPLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.06.2019 FR 1906426**

(43) Date de publication de la demande:
**16.12.2020 Bulletin 2020/51**

(73) Titulaire: **COMMISSARIAT À L'ÉNERGIE
ATOMIQUE ET AUX
ÉNERGIES ALTERNATIVES
75015 Paris (FR)**

(72) Inventeurs:
• **BENAHMED, Selimen
38054 GRENOBLE cedex 09 (FR)**
• **ALLIER, Cédric
38054 GRENOBLE cedex 09 (FR)**
• **BOUTAMI, Salim
38054 GRENOBLE cedex 09 (FR)**

(74) Mandataire: **Le Goaller, Christophe
Innovation Competence Group
310 avenue Berthelot
69372 Lyon Cedex 08 (FR)**

(56) Documents cités:
**WO-A2-2008/136812 FR-A1- 3 041 474
JP-A- 2014 115 553**

## Description

### DOMAINE TECHNIQUE

Le domaine technique de l'invention est un dispositif et un procédé d'observation d'un échantillon fluorescent, présentant une sensibilité élevée. L'échantillon peut notamment être un échantillon biologique.

### ART ANTERIEUR

L'application de la microscopie à des échantillons fluorescents est une technique très courante d'observation, en particulier dans le domaine de la biologie ou du diagnostic médical. Selon cette technique, l'échantillon est disposé dans un plan objet d'un objectif, optiquement couplé à un capteur d'image. On illumine l'échantillon selon une longueur d'onde d'excitation, induisant une fluorescence de l'échantillon, de façon à former une image de fluorescence. Le document WO2008136812 concerne l'amélioration d'émission de fluorescence à partir de fluorophores liés à un échantillon et présents à la surface de cristaux photoniques bidimensionnels. L'amélioration de fluorescence est réalisée par la combinaison de champs proches de haute intensité et d'effets de diffusion cohérente forts, attribués à des modes de résonance de cristaux photoniques. Le cristal photonique présente simultanément des modes de résonance qui recouvrent des longueurs d'onde d'absorption et d'émission du fluorophore.

Une des difficultés associées à l'imagerie de fluorescence est la sensibilité. En effet, le rendement de fluorescence, c'est-à-dire l'intensité de la lumière de fluorescence émise normalisée par l'intensité de la lumière d'excitation, est généralement faible. Le recours à des objectifs présentant des grandissements élevés est une solution pour améliorer la collecte de la lumière de fluorescence. Cependant, plus le grandissement est élevé, plus le champ d'observation est faible. Lorsqu'un échantillon de plusieurs dizaines de mm$^2$ doit être analysé, il est nécessaire de procéder à un balayage de l'échantillon, ce qui prend du temps et nécessite une instrumentation adaptée.

On sait que l'imagerie sans lentille permet de former une image d'un échantillon selon des champs d'observation élevés. Selon une telle configuration, aucune optique de formation d'image n'est interposée entre l'échantillon et le capteur d'image. Lorsque l'échantillon est rapproché du capteur d'image, le champ observé est légèrement inférieur à la surface du capteur d'image. Ainsi, on peut obtenir un champ d'observation atteignant plusieurs dizaines de mm$^2$. Cependant, l'absence d'optique de grossissement entre le capteur d'image et l'échantillon rend la technique d'imagerie sans lentille difficile à envisager dans les applications liées à l'imagerie de fluorescence, du fait d'une sensibilité peu satisfaisante.

Les inventeurs ont conçu un dispositif et un procédé d'observation d'un échantillon fluorescent, permettant l'obtention d'une image représentative de la fluorescence d'un échantillon, et cela avec une sensibilité élevée.

### EXPOSE DE L'INVENTION

Un premier objet de l'invention est un procédé d'observation d'un échantillon fluorescent, l'échantillon comportant un agent fluorescent émettant une lumière de fluorescence, dans une bande spectrale de fluorescence lorsqu'il est illuminé par une lumière d'excitation, dans une bande spectrale d'excitation, le procédé comportant les étapes suivantes :

    a) disposition de l'échantillon contre un support, et de préférence au contact du support ;
    b) illumination de l'échantillon, par une source de lumière, dans la bande spectrale d'excitation, la lumière émise par la source de lumière se propageant selon un axe de propagation;
    c) détection d'une lumière de fluorescence, dans la bande spectrale de fluorescence, par un capteur d'image;

le procédé étant tel que le support est disposé entre la source de lumière et le capteur d'image, et que le support comporte une couche mince formée d'un premier matériau, d'un premier indice de réfraction, la couche mince s'étendant selon un plan de support perpendiculaire à l'axe de propagation, le plan de support s'étendant selon un axe longitudinal, la couche mince comportant :

- des premières inclusions formées d'un deuxième matériau, d'un deuxième indice de réfraction, différent du premier indice de réfraction, les premières inclusions définissant un premier motif périodique, les premières inclusions étant réparties selon une première période, parallèlement à l'axe longitudinal, les premières inclusions formant un premier cristal photonique résonant dans la bande spectrale d'excitation;
- des deuxièmes inclusions, formées d'un troisième matériau, d'un troisième indice de réfraction, différent du premier indice de réfraction, et formant un deuxième motif périodique, les deuxièmes inclusions étant réparties selon une deuxième période, parallèlement à l'axe longitudinal, la deuxième période étant strictement supérieure à la première période, les deuxièmes inclusions formant un deuxième cristal photonique résonant dans la bande spectrale de fluorescence;
- au moins deux deuxièmes cristaux photoniques étant disposés de part et d'autre d'un premier cristal photonique;

de telle sorte que :

- une partie de la lumière émise par la source de lumière, à la longueur d'onde d'excitation, est confinée dans la couche mince, sous l'effet du premier cristal photonique, résultant en une amplification d'une onde lumineuse se propageant au niveau d'une interface entre la couche mince et l'échantillon;
- la lumière de fluorescence se propage dans la couche mince, à travers un premier cristal photonique, en étant réfléchie par les deuxièmes cristaux photoniques disposés de part et d'autre du premier cristal photonique, résultant en une amplification de la lumière de fluorescence.

Ainsi, selon l'axe longitudinal, au moins un premier cristal photonique est délimité par deux deuxièmes cristaux photoniques, s'étendant respectivement de part et d'autre du premier cristal photonique, ou de part et d'autre de chaque premier cristal photonique.

L'image formée par le capteur d'image permet de localiser des parties fluorescentes de l'échantillon dans un plan de détection défini par le capteur d'image. Elle comporte des zones intenses, correspondant aux parties fluorescentes de l'échantillon.

De préférence, l'échantillon est disposé au contact de la couche mince, ou à une distance de cette dernière inférieure à 1 mm.

Selon un mode de réalisation,

- le premier cristal photonique est monodimensionnel, les premières inclusions s'étendant parallèlement à un axe latéral perpendiculaire à l'axe longitudinal ;
- et/ou le deuxième cristal photonique est monodimensionnel, les deuxièmes inclusions s'étendant parallèlement l'axe latéral.

Selon un mode de réalisation,

- le premier cristal photonique est bidimensionnel, les premières inclusions étant espacées les unes des autres, selon un axe latéral perpendiculaire à l'axe longitudinal ;
- et/ou le deuxième cristal photonique est bidimensionnel, les deuxièmes inclusions étant espacées les unes des autres, selon l'axe latéral.

La première période, parallèlement à l'axe longitudinal, peut être comprise entre 100 nm et 300 nm, ou entre 200 nm et 300 nm. La deuxième période, parallèlement à l'axe longitudinal, peut être comprise entre 200 nm et 400 nm, ou entre 300 nm et 400 nm. L'épaisseur de la couche mince, selon l'axe de propagation, peut être comprise entre 100 nm et 300 nm.

Le support est de préférence disposé entre l'échantillon et le capteur d'image.

Selon un mode de réalisation, aucune optique de formation d'image, par exemple de type lentille ou objectif, n'est disposée entre le capteur d'image et le support. Selon un autre mode de réalisation, un système optique, de type lentille ou objectif, permet une conjugaison de la couche mince avec le capteur d'image.

Le troisième matériau, formant les deuxièmes inclusions peut être identique au deuxième matériau, formant les premières inclusions.

Un deuxième objet de l'invention est un dispositif d'observation d'un échantillon fluorescent, l'échantillon comportant un agent fluorescent émettant une lumière de fluorescence, dans une bande spectrale de fluorescence lorsqu'il est illuminé par une lumière d'excitation, dans une bande spectrale d'excitation, le dispositif comportant :

- une source de lumière, configurée pour émettre une onde lumineuse d'illumination dans la bande spectrale d'excitation, la lumière se propageant, vers l'échantillon, selon un axe de propagation;
- un capteur d'image, configuré pour détecter une lumière de fluorescence, émise par l'échantillon, dans la bande spectrale de fluorescence ;
- un support d'échantillon, configuré pour recevoir l'échantillon, le support étant disposé entre la source de lumière et le capteur d'image,

le dispositif étant tel que :
le support comporte une couche mince formée d'un premier matériau, d'un premier indice de réfraction, la couche mince s'étendant selon un plan de support perpendiculaire à l'axe de propagation, le plan de support s'étendant selon un axe longitudinal, la couche mince comportant :

- des premières inclusions formées d'un deuxième matériau, d'un deuxième indice de réfraction, différent du premier indice de réfraction, les premières inclusions définissant un premier motif périodique, les premières inclusions étant réparties selon une première période, parallèlement à l'axe longitudinal, les premières inclusions formant un premier cristal photonique résonant dans la bande spectrale d'excitation, le premier cristal photonique étant configuré pour confiner une partie de l'onde lumineuse d'illumination dans la couche mince ;
- des deuxièmes inclusions, formées d'un troisième matériau, d'un troisième indice de réfraction, différent du premier indice de réfraction, et formant un deuxième motif périodique, les deuxièmes inclusions étant réparties selon une deuxième période, parallèlement à l'axe longitudinal, la deuxième période étant strictement supérieure à la première période, les deuxièmes inclusions formant un deuxième cristal photonique résonant dans la bande spectrale de fluorescence;
- au moins deux deuxièmes cristaux photoniques étant disposés de part et d'autre d'un premier cristal photonique.

Selon un mode de réalisation,

- le premier cristal photonique est monodimensionnel, les premières inclusions s'étendant parallèlement à un axe latéral perpendiculaire à l'axe longitudinal;
- et/ou le deuxième cristal photonique est monodimensionnel, les deuxièmes inclusions s'étendant parallèlement l'axe latéral.

Selon un mode de réalisation,

- le premier cristal photonique est bidimensionnel, les premières inclusions étant espacées les unes des autres, selon un axe latéral perpendiculaire à l'axe longitudinal;
- et/ou le deuxième cristal photonique est bidimensionnel, les deuxièmes inclusions étant espacées les unes des autres, selon l'axe latéral.

La première période, parallèlement à l'axe longitudinal, peut être comprise entre 100 nm et 300 nm, et de préférence entre 200 nm et 300 nm. La deuxième période peut être comprise entre 200 nm et 400 nm, et de préférence entre 300 nm et 400 nm. L'épaisseur de la couche mince, selon l'axe de propagation, peut être comprise entre 100 nm et 300 nm.

Le support peut être délimité par une face supérieure, adjacente de la couche mince, et une face inférieure, opposée à la face supérieure. Le capteur d'image peut alors être disposé face au support, plus proche de la face inférieure que de la face supérieure.

Selon un mode de réalisation, aucune optique de formation d'image, par exemple de type lentille ou objectif, ne s'étend entre le support et le capteur d'image. Selon un autre mode de réalisation, un système optique, de type lentille ou objectif, permet une conjugaison de la couche mince avec le capteur d'image.

Selon un mode de réalisation, le troisième matériau, formant les deuxièmes inclusions est identique au deuxième matériau, formant les premières inclusions.

Selon un mode de réalisation, le support et le capteur d'image sont solidaires l'un de l'autre. Ils peuvent former un même composant.

Le premier objet de l'invention peut comporter des caractéristiques décrites en lien avec le deuxième objet de l'invention et réciproquement.

L'invention sera mieux comprise à la lecture de l'exposé des exemples de réalisation présentés, dans la suite de la description, en lien avec les figures listées ci-dessous.

## FIGURES

La figure 1A représente un mode de réalisation de dispositif selon l'invention.
Les figures 1B et 1C représentent un support d'échantillon faisant partie du dispositif.
Les figures 1D et 1E schématisent des autres modes de réalisation de dispositif selon l'invention.
La figure 2A illustre un mode de réalisation selon lequel le support d'échantillon comporte une couche mince formée de cristaux photoniques monodimensionnels.
Les figures 2B et 2C illustrent des modes de réalisation selon lesquels le support d'échantillon comporte une couche mince formée de cristaux photoniques bidimensionnels.
La figure 3A montre une configuration modélisée, dans laquelle le support d'échantillon comporte une couche mince formée d'un premier cristal photonique
Les figures 3B et 3C sont les résultats de modélisations de la propagation d'un champ électromagnétique dans la configuration représentée sur la figure 3A, respectivement selon deux longueurs d'onde différentes.
La figure 4A montre une configuration modélisée, représentative de l'invention.
Les figures 4B et 4C sont les résultats de modélisations de la propagation d'un champ électromagnétique dans la configuration représentée sur la figure 4A, respectivement selon deux longueurs d'onde différentes.
La figure 5A illustre une propagation d'un champ électromagnétique lorsqu'une particule est disposée sur un support uniforme constitué de silice.
La figure 5B illustre une propagation d'un champ électromagnétique, à une longueur d'onde de fluorescence, lorsqu'une particule est disposée sur un support tel que représenté sur la figure 3A.
La figure 5C illustre une propagation d'un champ électromagnétique, à une longueur d'onde de fluorescence, lorsqu'une particule est disposée sur un support tel que représenté sur la figure 4A.
La figure 6 montre des profils d'intensité d'images respectivement formées avec un support de silice, selon l'art antérieur, et un support selon l'invention.
Les figures 7A à 7H schématisent les principales étapes de fabrication d'un support pouvant être utilisé dans un dispositif ou un procédé selon l'invention.

## EXPOSE DE MODES DE REALISATION PARTICULIERS

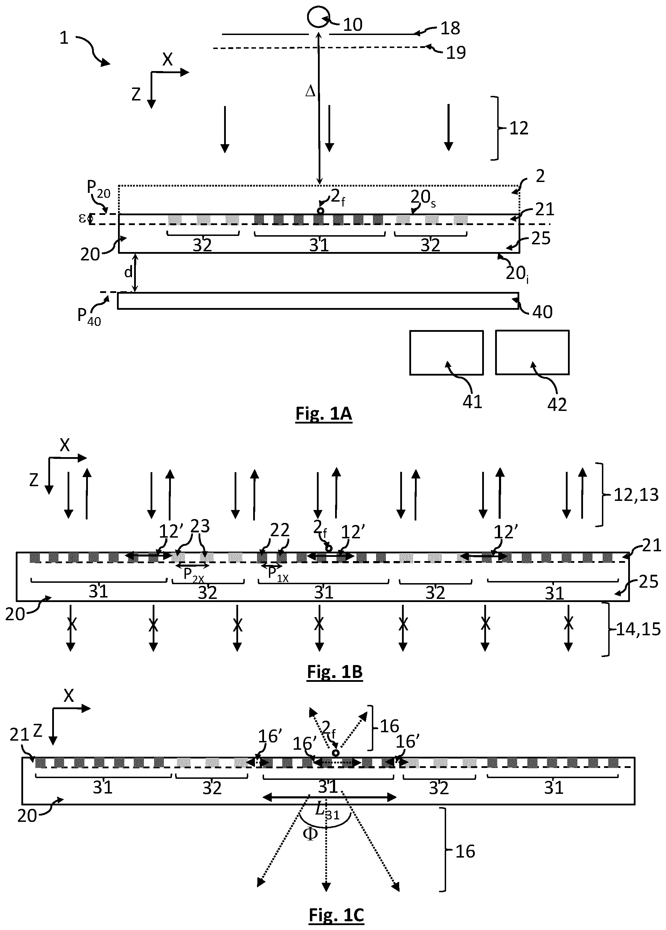

La figure 1A représente un dispositif 1 formant un premier mode de réalisation de l'invention. Une source de lumière 10 produit une onde lumineuse incidente 12 en direction d'un support 20, ce dernier étant disposé entre la source de lumière 10 et un capteur d'image 40.

L'échantillon 2 à analyser est placé contre un support 20. Le support 20 est délimité par une face supérieure $20_s$, disposée face à la source de lumière 10, et une face inférieure $20_i$, disposée en vis-à-vis du capteur d'image 40. Le capteur d'image est plus proche de la face inférieure $20_i$ que de la face supérieure $20_s$.

Dans cet exemple, l'échantillon 2 est un échantillon liquide, comportant des particules $2_f$ fluorescentes. Le liquide peut notamment comprendre un liquide biologique, de type sang, lymphe, sperme ou autre. Chaque particule fluorescente $2_f$ émet une lumière de fluorescence 16, dans une bande spectrale de fluorescence $\Delta\lambda_f$, lorsqu'elle est illuminée dans une bande spectrale d'excitation $\Delta\lambda_e$. L'onde lumineuse incidente 12, émise par la source de lumière, s'étend dans une bande spectrale d'illumination $\Delta\lambda$ correspondant à tout ou partie de la bande spectrale d'excitation $\Delta\lambda_e$. De préférence, la bande spectrale d'illumination $\Delta\lambda$ ne s'étend pas dans la bande spectrale de fluorescence $\Delta\lambda_f$, ou de façon marginale. Par de façon marginale, on entend qu'au maximum 5%, voire 1%, voire 0.1%, de l'intensité de l'onde lumineuse incidente est émise dans la bande spectrale de fluorescence $\Delta\lambda_f$.

Quel que soit le mode de réalisation, la bande spectrale d'illumination $\Delta\lambda$ de la source de lumière 10 est de préférence ajustée à une première longueur d'onde de résonance $\lambda_{r1}$ d'un premier cristal photonique 31 formé dans le support 20, comme décrit par la suite. La bande spectrale d'illumination $\Delta\lambda$ peut se situer dans le domaine visible, proche UV (> 200 nm), proche infrarouge (< 3 $\mu$m) ou moyen infra-rouge (entre 3 et 10 à 12 $\mu$m). Un filtre passe-bande 19 peut être disposé entre la source de lumière 10 et le support 20 , de façon à ajuster la bande spectrale d'illumination de la source de lumière, en particulier par rapport à la longueur d'onde de résonance précédemment évoquée. La largeur de la bande spectrale d'illumination $\Delta\lambda$ de l'onde lumineuse incidente 12 est de préférence inférieure à 50 nm, voire à 10 nm, voire à 5 nm.

D'une façon générale, une particule fluorescente $2_f$ a une taille avantageusement inférieure à 1 mm, voire inférieure à 500 $\mu$m, et de préférence une taille comprise entre 5 nm et 100 $\mu$m. Il peut notamment s'agir d'une particule biologique, de type bactérie, ou autre microorganisme, virus, cellule, par exemple une cellule sanguine, ou une microbille. Il peut également s'agir d'une molécule, par exemple une protéine, ou un fragment de protéine. Il peut également s'agir d'une molécule formant une séquence de nucléotides. La particule présente une fluorescence endogène ou exogène. Dans ce dernier cas, elle peut avoir été préalablement marquée par un marqueur fluorescent.

L'échantillon 2 peut également être un solide, suffisamment fin pour que l'onde lumineuse incidente 12 puisse atteindre le support 20. Il peut par exemple s'agir d'un échantillon obtenu par séchage d'un liquide sur le support 20, ou d'une fine lame solide, par exemple une lame d'un tissu biologique de type lame d'anatomopathologie.

La source de lumière 10 est de préférence ponctuelle. Elle peut notamment comprendre un diaphragme 18, ou filtre spatial. L'ouverture du diaphragme est typiquement comprise entre 5 $\mu$m et 1mm, de préférence entre 50 $\mu$m et 500 $\mu$m, par exemple 150 $\mu$m. Le diaphragme peut être remplacé par une fibre optique, et de préférence une fibre optique monomode, dont une première extrémité est placée face la source de lumière 10 et dont une deuxième extrémité est placée en regard de la face supérieure $20_s$ du support. La source de lumière 10 peut par exemple être une diode électroluminescente auquel cas le recours à un diaphragme est préférable. La source de lumière peut être une source laser, telle une diode laser. La source de lumière peut être accordable en longueur d'onde. Il peut s'agir d'une source laser accordable. Il peut s'agir d'un laser QCL (acronyme de Quantum Cascade Laser, signifiant laser à cascade quantique), et en particulier d'un laser à cavité externe.

L'onde lumineuse incidente 12 produite par la source de lumière 10 se propage vers le support parallèlement à un axe de propagation Z. De préférence, elle parvient au support 20 sous la forme d'une onde plane, ou pouvant être considérée comme telle, l'incidence étant de préférence normale à un plan de support $P_{20}$, selon lequel s'étend le support 20.

La distance $\Delta$ entre la source de lumière et l'échantillon est de préférence supérieure à 1 cm et de préférence comprise entre 2 et 30 cm. Avantageusement, la source de lumière, vue par l'échantillon, est considérée comme ponctuelle. Cela signifie que son diamètre (ou sa diagonale) est préférentiellement inférieure au dixième, mieux au centième de la distance entre l'échantillon et la source de lumière. Ainsi, l'onde lumineuse parvient au support sous la forme d'une onde plane, ou pouvant être considérée comme telle, l'incidence étant, dans cet exemple, normale.

Le capteur d'image 40 est apte à former une image selon un plan de détection $P_{40}$. Dans l'exemple représenté, la bande spectrale d'illumination $\Delta\lambda$ de la source de lumière, 10 se situe dans le domaine visible. Le capteur d'image 40 peut alors être un photodétecteur matriciel comportant une matrice de pixels, de type CCD ou CMOS. Le plan de détection $P_{40}$ s'étend dans cet exemple perpendiculairement à l'axe de propagation Z de l'onde lumineuse incidente 12. Le capteur d'image peut comprendre un système de renvoi d'image de type miroir vers une matrice de pixels, auquel cas le plan de détection $P_{40}$ correspond au plan selon lequel s'étend le système de renvoi d'image. D'une façon générale, le plan de détection $P_{40}$ correspond au plan dans lequel une image est formée.

Une unité de traitement 41 permet le traitement des images acquises par le capteur d'image 40. Elle est reliée à une mémoire 42, permettant d'effectuer des opérations de traitement d'images sur les images acquises.

La distance d entre le support 20 et la matrice de pixels du capteur d'image 40 est préférentiellement comprise entre 0 et 2 cm, de préférence comprise entre 0 et 2 mm.

Sur le mode de réalisation représenté sur la figure 1A, on remarque l'absence d'optique de grossissement ou de formation d'image entre le capteur d'image 40 et l'échantillon 2. Cela n'empêche pas la présence éventuelle de microlentilles de focalisation au niveau de chaque pixel du capteur d'image 40, ces dernières n'ayant pas de fonction de grandissement de l'image. Cela permet d'obtenir un dispositif compact. De plus, une telle configuration permet d'obtenir un champ d'observation élevé.

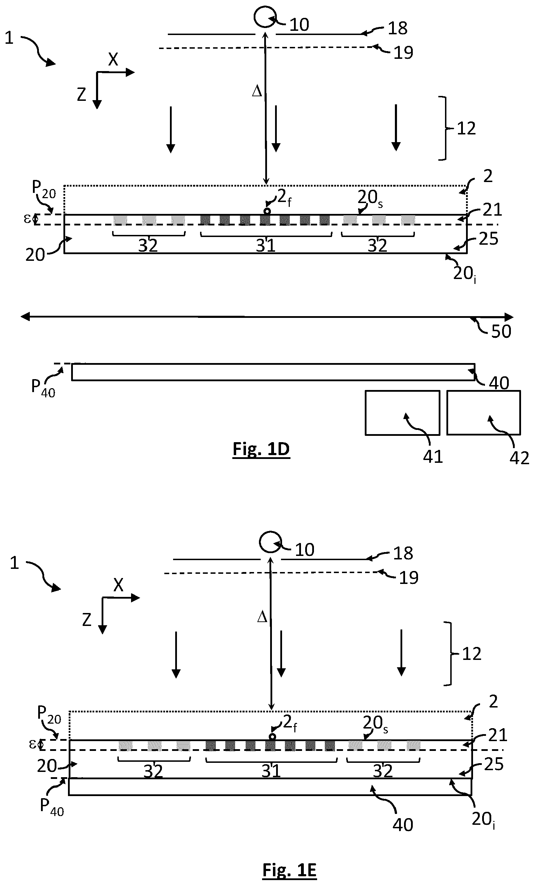

Selon un autre mode de réalisation, représenté sur la figure 1D, un objectif ou une lentille 50 peut être disposé entre le support 20 et le capteur d'image 40, ce qui permet d'éloigner le capteur d'image du support tout en conservant une bonne résolution spatiale des images formées par le capteur d'image. L'objectif ou la lentille 50 permet une conjuguer le capteur d'image 40 avec la couche mince 21.

Selon autre mode de réalisation, représenté sur la figure 1E, le support 20 forme un capot du capteur d'image 40. Ainsi, le capteur d'image 40 et le support 20 forment un même composant. La distance d entre le capteur d'image et le support est alors nulle.

Le support 20 comporte une partie inférieure 25 homogène, formée d'un matériau de base dont l'indice de réfraction est $n_0$. Le matériau de base est transparent à bande spectrale de fluorescence $\Delta\lambda_f$. L'épaisseur de la partie inférieure 25 est par exemple de quelques centaines de $\mu$m à quelques mm. Dans l'exemple réalisé, l'épaisseur de la partie inférieure 25 est de 725 $\mu$m.

Le support comporte également une couche mince 21 nano-structurée. Dans les modes de réalisation représentés, la couche mince 21 est adjacente de la face supérieure $20_s$ du support 20. Le terme couche mince désigne une couche dont l'épaisseur $\varepsilon$ est inférieure à 5 $\mu$m, voire à 1 $\mu$m. L'épaisseur $\varepsilon$ peut notamment être définie par rapport à une longueur d'onde $\lambda$ de la bande spectrale d'illumination $\Delta\lambda$, par exemple la longueur d'onde centrale de la bande spectrale d'illumination. De préférence, $\varepsilon \leq \lambda$ voire $\varepsilon \leq \dfrac{\lambda}{2}$. La couche mince 21 est parallèle au plan du support $P_{20}$.

La couche mince 21 est réalisée selon un premier matériau, transparent à tout ou partie de la bande spectrale d'illumination $\Delta\lambda$ de la source de lumière, ainsi qu'à la bande spectrale de fluorescence $\Delta\lambda_f$. Le premier matériau a un premier indice de réfraction $n_1$. Le premier matériau peut être confondu avec le matériau de base formant le reste du support, auquel cas $n_1 = n_0$. Il peut par exemple s'agir de $SiO_2$. La couche mince 21 est disposée à l'interface entre l'échantillon 2 et le support 20. Ainsi, l'échantillon 2 est au contact de la couche mince 21, ou à une distance de cette dernière inférieure à 10 $\mu$m, et de préférence à une distance inférieure à la longueur d'onde d'illumination.

Comme détaillé sur la figure 1B, La couche mince 21 comporte des premières inclusions 22, réalisées selon un deuxième matériau, transparent à tout ou partie de la bande spectrale d'illumination $\Delta\lambda$ et dans tout ou partie de la bande spectrale de fluorescence $\Delta\lambda_f$. Le deuxième matériau présente un deuxième indice de réfraction $n_2$. L'écart entre le premier indice $n_1$ et le deuxiè-me indice $n_2$ est de préférence supérieur à 0,1 voire 0,25. Ainsi, on a $n_2 > n_1$ et $n_2 > n_0$.

Chaque première inclusion 22 peut également prendre la forme d'un cône ou un tronc conique, de base circulaire ou polygonale, ou avoir une forme hémisphérique. Quelle que soit la forme retenue, la dimension de chaque première inclusion 22 est micrométrique, c'est-à-dire que selon le plan du support $P_{20}$, la plus grande dimension de chaque première inclusion 22 est inférieure à la longueur d'onde de la bande spectrale d'illumination. On parle de dimension « sub-longueur d'onde ». Les premières inclusions 22 définissent, dans la couche mince 21, un premier cristal photonique 31. Elles sont agencées selon un premier motif, qui est répété périodiquement sur la couche mince 21.

Le plan du support $P_{20}$ est défini par un axe longitudinal X perpendiculaire à un axe latéral Y. Les premières inclusions 22 peuvent s'étendre parallèlement à l'axe latéral Y, auquel cas le premier cristal photonique 31 est monodimensionnel. Les premières inclusions peuvent être réparties périodiquement selon l'axe longitudinal X et selon l'axe latéral Y auquel cas le premier cristal photonique 31 est bidimensionnel. Le premier cristal photonique est paramétré par les indices respectifs du premier matériau et du deuxième matériau, ainsi que par la dimension des premières inclusions 22. Il est également paramétré par une première période Pix selon l'axe X. Lorsque le cristal photonique est bidimensionnel, il est également paramétré par une première période $P_{1Y}$ selon l'axe Y. Par période, il est entendu l'espacement, centre à centre, entre deux inclusions adjacentes selon l'axe X ou selon l'axe Y.

Le premier cristal photonique 31 présente une première longueur d'onde de résonance $\lambda_{r1}$, à laquelle les propriétés de transmission et de réflexion de la lumière peuvent être déterminées à l'aide de simulations effectuées par des codes de calcul. En effet, les propriétés de propagation de la lumière dans les réseaux de diffraction découlent de leur arrangement périodique spécifique et sont aisément modélisées, par l'homme du métier, sur la base des équations spatio-temporelles de Maxwell. Dans la suite de cette description, les modélisations sont réalisées à l'aide du logiciel RSOFT-Fullwave, mettant en œuvre une méthode de type FDTD "Finite différence time domain method".

Par cristal photonique, on entend une structure, et, par exemple, une structure diélectrique, dont l'indice varie périodiquement à l'échelle de la longueur d'onde, dans une ou plusieurs directions. L'invention tire alors profit du développement de techniques de micro structuration des matériaux diélectriques, permettant un contrôle de l'interaction des ondes électromagnétiques dans des structures tridimensionnelles basées sur l'agencement de matériaux de différents indices. Grâce à la précision nanométrique des procédés de microfabrication, on peut à présent réaliser des cristaux photoniques correspondant à une échelle de structuration de la matière voisine du quart ou de la demi-longueur d'onde, ce qui les rend compatibles avec des applications en optique.

Dans le cas présent, à la première longueur d'onde de résonance $\lambda_{r1}$, le premier cristal photonique 31 ne transmet pas la lumière. A la première longueur d'onde de résonance $\lambda_{r1}$, le premier cristal photonique permet un confinement, dans la couche mince 21, d'une partie de l'onde incidente 12, parvenant à la couche mince 21 selon une incidence normale, formant alors un faisceau de lumière confiné 12'. Le faisceau de lumière confiné 12' se propage ainsi le long de la couche mince 21, à l'interface entre le support 20 et l'échantillon 2.

La première longueur d'onde de résonance $\lambda_{r1}$ est comprise dans la bande spectrale d'illumination $\Delta\lambda$ de l'onde lumineuse incidente 12. Elle est donc comprise dans la bande spectrale d'excitation $\Delta\lambda_e$ de la particule fluorescente $2_f$.

Le taux de couplage $\Gamma$ des photons de l'onde incidente 12 dans la couche mince 21 peut atteindre par exemple 10%. Par taux de couplage, on entend un ratio entre un nombre de photons couplés et un nombre de photons incidents. Dans ce cas, 10% du flux incident est couplé au réseau résonant. Le taux de découplage de la couche mince 21, où taux de fuite, a la même valeur que le taux de couplage $\Gamma$, en l'occurrence 10%. Lors de l'illumination du support 20 par la source 10, à la première longueur d'onde de résonance $\lambda_{r1}$, l'intensité du faisceau lumineux 12' confiné dans la couche mince 21, par le premier cristal photonique augmente quasi-instantanément, jusqu'à dépasser 10 fois l'intensité de l'onde lumineuse incidente. Les photons couplés par le premier cristal photonique 31 compensent les pertes issues du découplage. Ces pertes forment une onde 13 se propageant vers la source de lumière, et d'une onde 15 se propageant vers le capteur d'image 40, les ondes 13 et 15 se propageant parallèlement à l'axe de propagation Z.

L'intensité de l'onde 13 réfléchie par le support 20 dans un sens opposé au sens de propagation Z est équivalente à l'intensité de l'onde lumineuse incidente 12. Par ailleurs, l'onde 15 formée par les pertes du réseau selon le sens de propagation Z est en opposition de phase avec une onde 14 transmise par le support, cette dernière étant formée par la partie de l'onde lumineuse incidente 12 non couplée par le premier cristal photonique. Par transmise par le support, on entend se propageant à travers le support, puis au-delà de ce dernier, dans le même sens que l'onde lumineuse incidente 12. Il se forme alors des interférences destructives, bloquant l'exposition du capteur d'image 40. Ces interférences destructives sont symbolisées, sur la figure 1B, par le symbole X.

Par conséquent, à la première longueur d'onde de résonance, $\lambda_{r1}$, le premier cristal photonique 31 agit comme un miroir résonant, avec un coefficient de réflexion proche de 1. On parle de réflexion résonante. Dans ces conditions, le capteur d'image 40 se trouve dans une configuration dite en fond noir, car il n'est pas exposé à une lumière provenant du support 20. En réalité, compte tenu d'imperfections, le capteur d'image 40 est exposé à un fond sombre, de faible niveau de gris et pouvant être considéré comme homogène.

Du fait du confinement de la lumière incidente 12, dans la bande spectrale d'illumination, par couche mince 21, chaque particule fluorescente $2_f$ est soumise à un faisceau d'excitation intense. Cela contribue à augmenter la quantité de lumière de fluorescence 16 émise par chaque particule fluorescente. En effet, la quantité de lumière de fluorescence est généralement considérée comme une fonction croissante, et généralement linéaire, de la quantité de lumière d'excitation. L'apparition du faisceau confiné 12' dans la couche mince 21, permet une amplification de l'intensité de l'onde lumineuse parvenant à chaque particule fluorescente, dans la longueur d'onde d'excitation. Il en résulte une augmentation significative de l'intensité de la lumière de fluorescence 16 émise par chacune d'entre elle.

Comme on peut le voir sur la figure 1B, plusieurs premiers cristaux photoniques 31, séparés les uns des autres, sont répartis dans la couche mince 21. Entre deux premiers cristaux photoniques 31 adjacents, la couche mince 21 comporte des deuxièmes inclusions 23, réalisées selon un troisième matériau, transparent à tout ou partie de la bande spectrale de fluorescence $\Delta\lambda_f$. Le troisième matériau présente un troisième indice de réfraction $n_3$. L'écart entre le premier indice $n_1$ du premier matériau, formant la couche mince 21, et le troisième indice $n_3$ est de préférence supérieur à 0,1 voire 0,25. Le troisième indice $n_3$ est supérieur au premier indice $n_1$.

Les deuxièmes inclusions 23 présentent des caractéristiques géométriques telles que celles décrites en lien avec les premières inclusions 22. Les deuxièmes inclusions 23 forment, avec le premier matériau de la couche mince 21, un deuxième cristal photonique 32, ce dernier étant configuré pour présenter une deuxième longueur d'onde de résonance $\lambda_{r2}$. La deuxième longueur d'onde de résonance $\lambda_{r2}$ est différente de la première longueur d'onde de résonance $\lambda_{r1}$ des premiers cristaux photoniques. La deuxième longueur d'onde de résonance $\lambda_{r2}$ est comprise dans la bande spectrale de fluorescence $\Delta\lambda_f$.

A l'instar du premier cristal photonique 31, le deuxième cristal photonique 32 est défini selon une deuxième période $P_{2X}$ selon l'axe longitudinal X et, lorsque le cristal est bidimensionnel, une deuxième période $P_{2Y}$ selon l'axe latéral Y. La longueur d'onde de fluorescence étant supérieure à la longueur d'onde d'excitation, selon chaque direction, la deuxième période est supérieure à la première période. Ainsi, $P_{2X} > P_{1X}$ et $P_{2Y} > P_{1Y}$.

Le troisième matériau, formant les deuxièmes inclusions 23 peut être différent ou similaire au deuxième matériau, formant les premières inclusions 22. Il peut s'agir par exemple de $Si_3N_4$ (SiN).

Sous l'effet de l'onde lumineuse d'illumination 12 et du faisceau confiné 12' se propageant à l'interface entre le support 20 et l'échantillon 2, chaque particule fluorescente $2_f$, située au contact de la couche mince ou à une distance suffisamment faible de cette dernière, émet une lumière de fluorescence 16, selon un angle solide de 4π. L'effet d'amplification de la lumière de fluorescence par le faisceau confiné n'est obtenu qu'au contact de la couche mince, ou à une distance sub-longueur d'onde de cette dernière. Il s'agit d'un effet dit de champ proche.

Une partie de la lumière de fluorescence 16 se propage à travers la couche mince 21, et plus précisément à travers un premier cristal photonique 31, formant un faisceau de fluorescence confiné 16'. La couche mince 21 comporte plusieurs premiers cristaux photoniques 31 séparés les uns des autres par un deuxième cristal photonique 32. Le faisceau de fluorescence confiné 16' se forme dans le cristal photonique, ou dans les cristaux photoniques, les plus proches de la particule fluorescente $2_f$.

Chaque premier cristal photonique 31 n'est pas résonant à l'égard des longueurs d'onde de la bande spectrale de fluorescence $\Delta\lambda_f$. Du fait de la présence des premières inclusions ni, chaque premier cristal photonique présente un indice de réfraction effectif $n_{eff}$ qui est supérieur à l'indice $n_0$ du matériau de base formant le support 20. Cette différence d'indice entre chaque premier cristal photonique 31 et la partie inférieure du support 25 explique la formation du faisceau de fluorescence confiné 16'. Par indice effectif $n_{eff}$, on entend une moyenne de l'indice $n_1$ du premier matériau, formant la couche mince 21, et de l'indice $n_2$ du deuxième matériau, formant les premières inclusions 22, la moyenne étant pondérée par les volumes respectifs du premier matériau et du deuxième matériau dans la couche mince 21. Ainsi, le premier cristal photonique, ou les premiers cristaux photoniques, les plus proches du lieu d'émission de la fluorescence, se comportent comme des guides d'onde d'indice $n_{eff}$.

Une partie du faisceau de fluorescence confiné 16' se découple, et se propage vers le capteur d'image 40.

Chaque deuxième cristal photonique 32 est configuré pour former un réflecteur dans la bande spectrale de fluorescence. Ainsi, comme représenté sur la figure 1C, le faisceau de fluorescence confiné 16', se propageant à travers un premier cristal photonique 31, est réfléchi par les deuxièmes cristaux photoniques 32 adjacents du premier cristal photonique. On obtient ainsi un mode guidé, se propageant à travers un premier cristal photonique 31, et successivement réfléchi par les cristaux photoniques 32 s'étendant de part et d'autre du premier cristal photonique 31. De la même manière qu'une cavité de Fabry Perot, il en résulte une amplification du signal de fluorescence à l'intérieur de la couche mince.

La largeur $L_{31}$, parallèlement à l'axe longitudinal X, selon laquelle s'étend le premier cristal photonique 31, est de préférence telle que:

$$\frac{2\pi}{\lambda_f} n_{eff} \times 2L_{31} + 2\varphi = 2\pi m \quad (1)$$

où

- $\varphi$ correspond au déphasage produit par chaque réflexion induite par un deuxième cristal photonique 32. Il peut être déterminé par modélisation numérique.
- m est un entier naturel non nul.
- $\lambda_f$ est une longueur d'onde de fluorescence.

avec

$$n_{eff} = \sqrt{ff \times n_2 + (1 - ff) \times n_1} \quad (2)$$

où $ff$ correspond à la fraction volumique de la couche mince 21 occupée par les premières inclusions 22 dans un même premier cristal photonique 31.

On obtient :

$$L_{31} = \frac{\lambda_f(\pi m - \varphi)}{2\pi n_{eff}} \quad (3)$$

Ainsi, pour obtenir une amplification importante de la lumière de fluorescence, la dimension $L_{31}$, selon l'axe longitudinal X, du premier cristal photonique satisfait à l'équation (3).

Chaque faisceau de fluorescence confiné ne se propage qu'à travers un seul premier cristal photonique 31, en étant réfléchi de part et d'autre de ce dernier, par les deuxièmes cristaux photoniques 32 adjacents du premier cristal photonique. Il s'agit donc d'un effet de confinement localisé. Ainsi, l'image formée sur le capteur d'image 40 permet de localiser les zones de l'échantillon dans lesquelles une fluorescence est émise. Elle peut permettre d'évaluer leur étendue, dans le plan de support, ou de les dénombrer. Elle peut également permettre de comparer les intensités de fluorescence relative de différentes zones fluorescentes de l'échantillons.

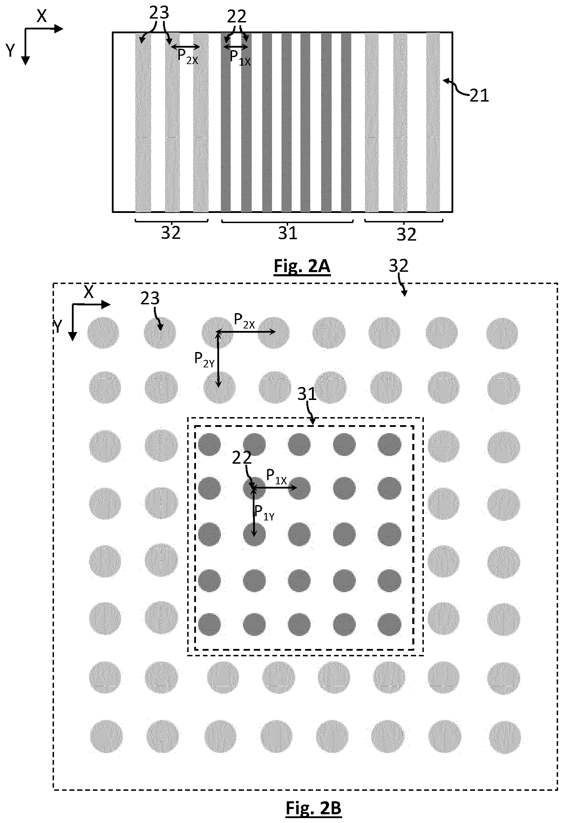

Un premier exemple de dimensionnement de premiers cristaux photoniques et de deuxièmes cristaux photoniques monodimensionnels, tels que représentés sur la figure 2A est :

- matériau du support : $SiO_2$, épaisseur 725 μm ;
- premier matériau (couche mince) : $SiO_2$ ;
- épaisseur ε de la couche mince 21 : 160 nm
- deuxième matériau (premières inclusions 22) : $Si_3N_4$ (SiN - Nitrure de Silicium) ;
- facteur de remplissage du premier cristal photonique : 50 % ;
- diamètre des premières inclusions : 130 nm ;
- première période $P_{1X}$ du premier cristal photonique : 260 nm ;
- longueur d'onde de résonance du premier cristal photonique : 405 nm ;
- troisième matériau (deuxièmes inclusions 23) : $Si_3N_4$ (SiN - Nitrure de Silicium) ;

- facteur de remplissage du deuxième cristal photonique : 50 % ;
- deuxième période $P_{2X}$ du deuxième cristal photonique : 330 nm ;
- diamètre des deuxièmes inclusions : 165 nm ;
- longueur d'onde de résonance du deuxième cristal photonique : 550 nm.

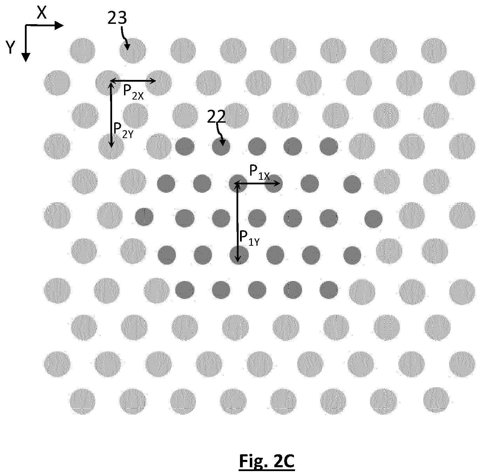

Les figures 2B et 2C montrent des exemples de cristaux photoniques bidimensionnels. Sur la figure 2B, les premier et deuxième cristaux photoniques sont entourés par un cadre en tirets. Pour un même cristal photonique, la période de répétition du motif selon l'axe longitudinal (Pix ou $P_{2X}$) peut être identique ou différente de la période de répétition du motif selon l'axe latéral ($P_{1Y}$ ou $P_{2Y}$).

On a réalisé des simulations de l'intensité du champ électrique de différents supports, comportant des cristaux photoniques monodimensionnels, similaires à ceux décrits en lien avec la figure 2A.

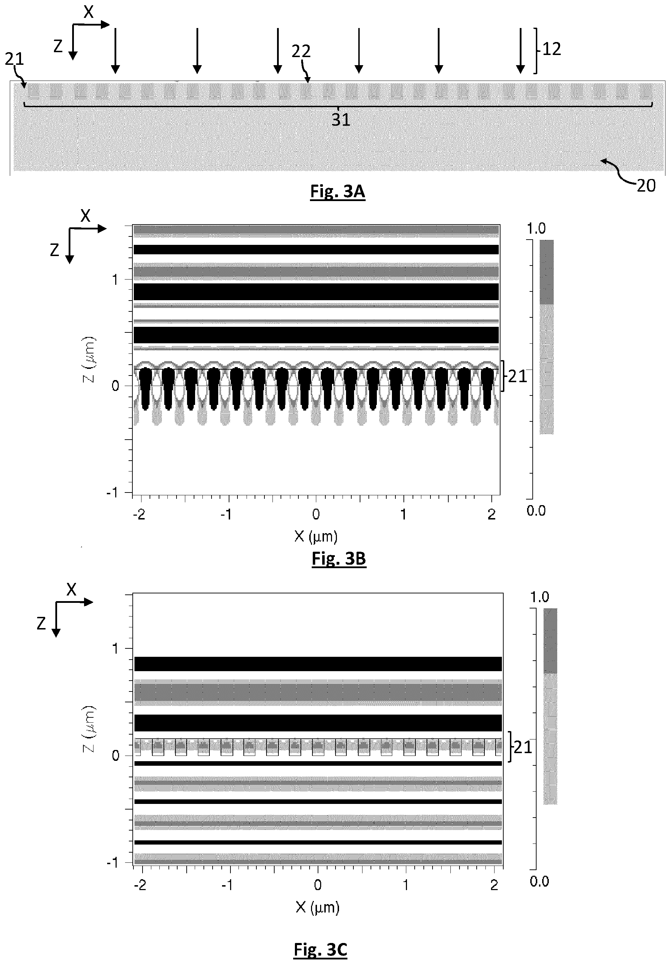

Les figures 3A à 3C montrent les résultats d'une première modélisation. Sur la figure 3A, on a représenté la structure modélisée : Il s'agit d'un support 20 de SiO$_2$ présentant, à l'interface avec l'air 3, une couche mince 21 présentant un premier cristal photonique, tel que paramétré dans le premier exemple préalablement décrit. La couche mince 21 est uniquement formée d'inclusions 22 de SiN dans du SiO$_2$ selon une période de 260 nm et un facteur de remplissage de 50%.

Les figures 3B et 3C représentent l'intensité du champ électrique lorsque le support est illuminé par une onde lumineuse incidente 12 respectivement :

- à la longueur d'onde de 405 nm, qui correspond à la longueur d'onde de résonance du premier cristal photonique 31 ;
- et à la longueur d'onde de 550 nm, qui correspond à la longueur d'onde de fluorescence modélisée.

On observe qu'à la longueur d'onde de résonance (figure 3B), le premier cristal photonique se comporte comme un miroir. A la longueur d'onde de fluorescence (figure 3C), le premier cristal photonique transmet la lumière, cette dernière se propageant à travers le support 20.

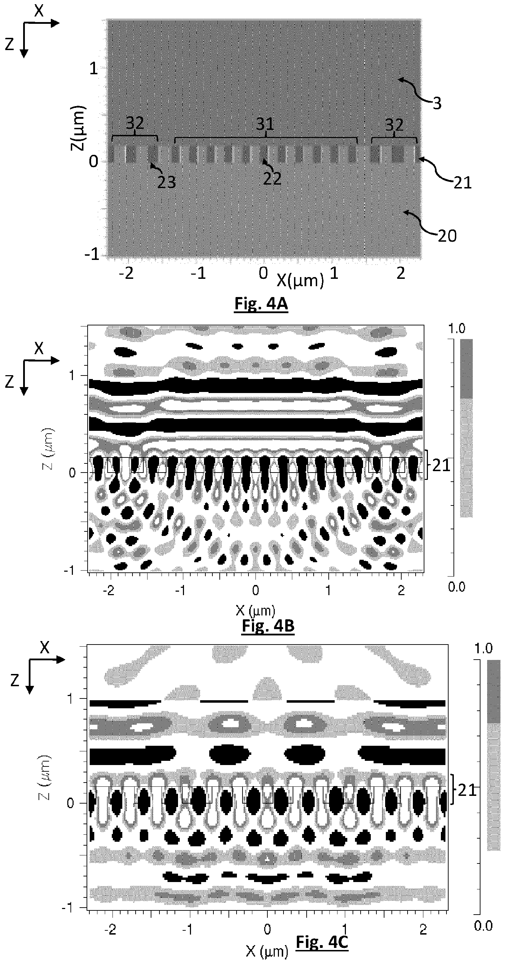

Les figures 4A à 4C montrent les résultats d'une deuxième modélisation. Sur la figure 4A, on a représenté la structure modélisée : Il s'agit d'un support 20 de SiO$_2$ présentant, à l'interface avec l'air 3, une couche mince 21 présentant un premier cristal photonique 31 ainsi qu'un deuxième cristal photonique 32, tel que paramétrés dans le premier exemple préalablement décrit. Le premier cristal photonique 31 s'étend, parallèlement à l'axe X, selon une longueur $L_{31}$ vérifiant l'équation (3).

Les figures 4B et 4C représentent l'intensité du champ électrique lorsque le support est illuminé par une onde lumineuse incidente 12 respectivement :

- à la longueur d'onde de 405 nm, qui correspond à la longueur d'onde de résonance du premier cristal photonique 31 ;
- et à la longueur d'onde de 550 nm, qui correspond à la longueur d'onde de fluorescence modélisée.

On observe, à la longueur d'onde de résonance (figure 4B), un gain d'intensité de l'onde lumineuse se propageant à la surface du support 20 (ou intensité du champ proche), le gain étant estimé à un facteur 10 par rapport à une configuration selon laquelle le support 20 est uniquement constitué de SiO$_2$. Lorsque la longueur d'onde de résonance correspond à la longueur d'onde d'excitation de la fluorescence, cela conduit à une forte augmentation du champ d'excitation de fluorescence au niveau de la face supérieure 20$_s$ du support.

A la longueur d'onde de fluorescence (figure 4C), on observe un gain d'intensité de l'onde lumineuse se propageant à travers le support 20, le gain étant estimé à un facteur 7 par rapport à une configuration selon laquelle le support 20 est uniquement constitué de SiO$_2$.

Ainsi, l'invention permet d'augmenter l'intensité de l'onde lumineuse d'illumination se propageant à la surface de la couche mince 21, et permettant l'excitation de la fluorescence, d'un facteur 10. Elle permet également d'augmenter l'intensité de l'onde lumineuse de fluorescence se propageant à travers le support 20, d'un facteur 7. Les deux gains pouvant se multiplier, les modélisations schématisées sur les figures 4A à 4C permettent d'estimer un gain d'un facteur 70 de l'intensité de fluorescence détectée par un capteur d'image disposé face au support 20, comme décrit en lien avec la figure 1A.

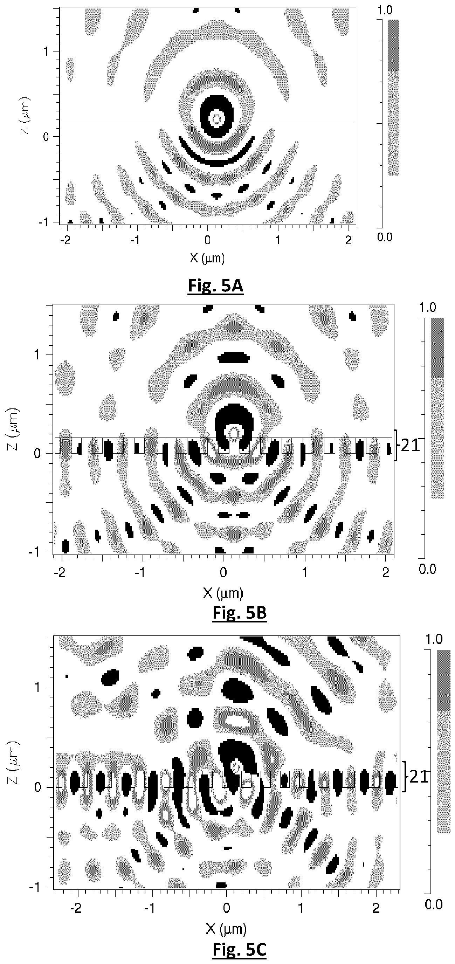

Les figures 5A à 5C montrent les résultats d'autres modélisations. Sur les figures 5A, 5B et 5C, on a modélisé l'intensité du champ électrique en illuminant un dipôle électrique à la longueur d'onde de 550 nm, le dipôle étant :

- disposé sur un simple support en SiO$_2$ : figure 5A ;
- disposé sur une couche mince 21 comportant un premier cristal photonique, telle que représenté sur la figure 3A : figure 5B ;
- disposé sur une couche mince 21 selon l'invention, telle que représenté sur la figure 4A : figure 5C.

On observe à nouveau un gain d'un facteur 7 entre la configuration de l'art antérieur (figure 5A) et la configuration selon l'invention (figure 5C).

La comparaison entre la figure 5B et la figure 5C montre que l'intensité du champ électromagnétique se propageant à travers le support 20 est bien supérieure avec la configuration selon l'invention. En effet, le premier cristal photonique 31 n'est pas résonant à la longueur d'onde de 550 nm. La figure 5B permet d'observer un confinement de l'onde lumineuse dans la couche mince 21, sous l'effet de l'indice effectif de cette dernière, qui est supérieur à l'indice du support 20 (en l'occurrence l'indice de la couche inférieure 25) et à l'indice de l'air.

Par ailleurs, sur la figure 5C, on observe que la lumière de fluorescence se propage, à partir de la couche mince 21, selon un angle Φ compris entre 0° et 45°, autour de l'axe de propagation Z.

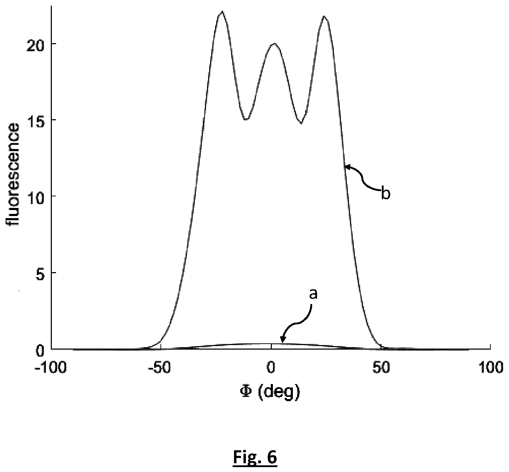

La figure 6 montre les résultats d'une simulation d'un profil d'une image de fluorescence obtenue en disposant une particule fluorescente modélisée par un dipôle électrique, sur un simple support de verre (courbe a) et sur un support selon l'invention (courbe b). On observe l'augmentation du signal collecté en mettant en œuvre un support selon l'invention. On observe également que la lumière de fluorescence se propage, à partir de la couche mince 21, en formant un cône de lumière dont le demi-angle est d'environ 50°, ce qui corrobore les observations formulées en lien avec la figure 5C.

Ainsi, la fluorescence atteint le capteur d'image 40 en formant un cône divergent à partir de la couche mince, selon un demi-angle relativement élevé. Afin d'obtenir une résolution spatiale correcte de l'image de fluorescence, il est préférable de disposer le capteur d'image au plus près du support 20, et par exemple au contact de ce dernier. La configuration d'imagerie sans lentille est donc particulièrement adaptée au support 20.

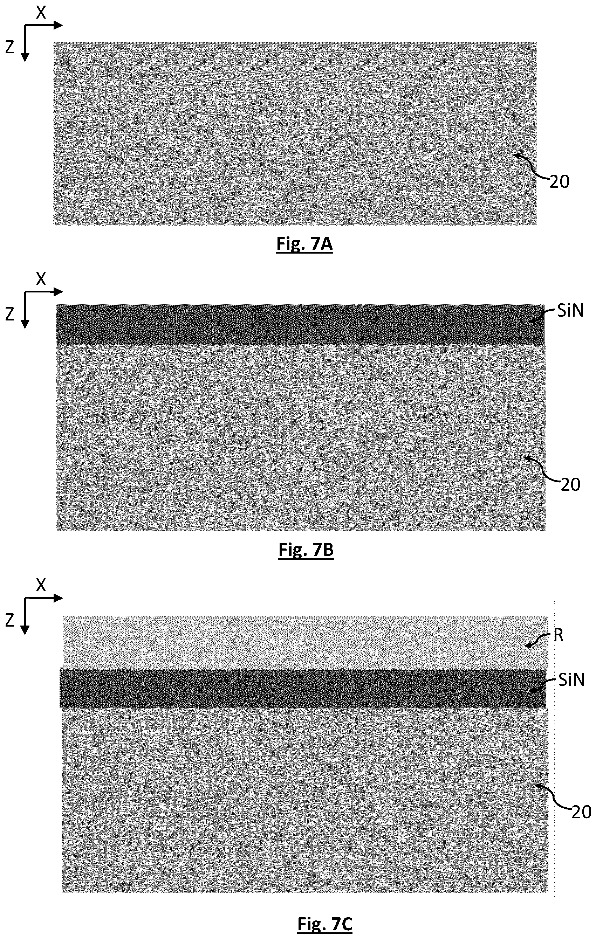

Les figures 7A à 7H décrivent les étapes de fabrication d'un support tel que précédemment décrit.

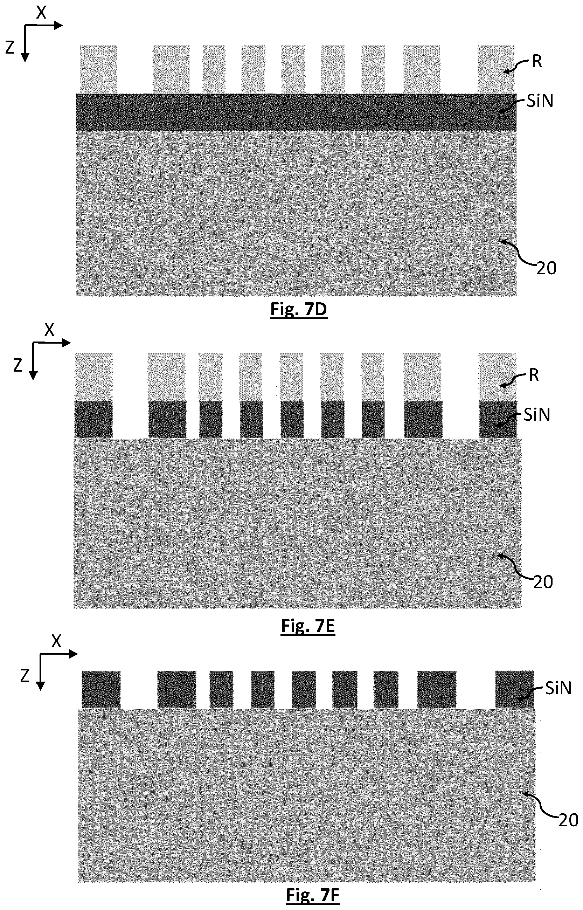

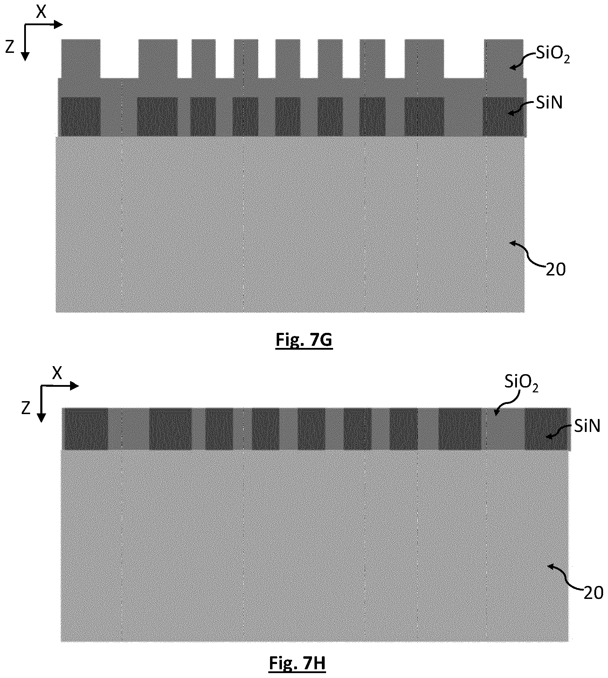

Sur la figure 7A, on a représenté un support 20 formé de $SiO_2$. Une couche de SiN d'épaisseur 160 nm est déposée : cf. figure 7B. Une résine R de photolithographie est ensuite appliquée (figure 7C). Une photolithographie de la résine est effectuée (figure 7D), suivie d'une gravure RIE (Reactive Ion Etching) : cf. figure 7E. La résine est ensuite retirée (figure 7F). On procède ensuite à un dépôt conforme de $SiO_2$ (figure 7G). La figure 7H montre une étape de polissage par CMP. (Chemical Mechanical Planarization).

Bien que décrite selon une configuration sans lentille, selon laquelle aucune optique de formation d'image n'est disposée entre le support et le capteur d'image, selon une variante, un système optique, de type lentille ou objectif, peut être disposé entre le support et le capteur d'image.

Par ailleurs, bien que dans les exemples décrits, chaque cristal photonique est obtenu à partir d'inclusions de nitrure de silicium dans une couche mince de silice, ce couple de matériaux n'est nullement limitatif et l'invention pourra mettre en œuvre d'autres matériaux, sous réserve d'une différence d'indice suffisante, en particulier supérieure à 0,25.

**Revendications**

1. Procédé d'observation d'un échantillon fluorescent (2), l'échantillon comportant un agent fluorescent émettant une lumière de fluorescence, dans une bande spectrale de fluorescence ($\lambda_f$) lorsqu'il est illuminé par une lumière d'excitation, dans une bande spectrale d'excitation ($\lambda_e$), le procédé comportant les étapes suivantes :

   a) disposition de l'échantillon contre un support (20);

   b) illumination de l'échantillon, par une source de lumière (10), dans la bande spectrale d'excitation ($\lambda_e$), la lumière (12) émise par la source de lumière se propageant selon un axe de propagation (Z);

   c) détection d'une lumière de fluorescence (16), dans la bande spectrale de fluorescence, par un capteur d'image (40);

   le procédé étant tel que le support est disposé entre la source de lumière et le capteur d'image, le procédé étant **caractérisé en ce que** le support comporte une couche mince (21) formée d'un premier matériau, d'un premier indice de réfraction ($n_1$), la couche mince s'étendant selon un plan de support ($P_{20}$) perpendiculaire à l'axe de propagation (Z), le plan de support s'étendant selon un axe longitudinal (X), la couche mince comportant :

   - des premières inclusions (22) formées d'un deuxième matériau, d'un deuxième indice de réfraction ($n_2$), différent du premier indice de réfraction ($n_1$), les premières inclusions définissant un premier motif périodique, les premières inclusions étant réparties selon une première période ($P_{1X}$), parallèlement à l'axe longitudinal (X), les premières inclusions formant un premier cristal photonique (31) résonant dans la bande spectrale d'excitation ($\lambda_e$) ;

   - des deuxièmes inclusions (23), formées d'un troisième matériau, d'un troisième indice de réfraction ($n_3$), différent du premier indice de réfraction, et formant un deuxième motif périodique, les deuxièmes inclusions étant réparties selon une deuxième période ($P_{2X}$), parallèlement à l'axe longitudinal, la deuxième période étant strictement supérieure à la première période, les deuxièmes inclusions formant un deuxième cristal photonique (32) résonant dans la bande spectrale de fluorescence ($\lambda_f$);

   - au moins deux deuxièmes cristaux photoniques (32) étant disposés de part et d'autre d'un premier cristal photonique (31);

   de telle sorte que :

   - une partie de la lumière émise par la source de lumière (10), à la longueur d'onde d'excitation, est confinée dans la couche mince (21), sous l'effet du premier cristal photonique, résultant en une amplification d'une onde lumineuse se propageant au niveau d'une interface entre la couche mince (21) et l'échantillon (2);

- la lumière de fluorescence (16) se propage dans la couche mince (21), à travers un premier cristal photonique (31), en étant réfléchie par les deuxièmes cristaux photoniques (32) disposés de part et d'autre du premier cristal photonique, résultant en une amplification de la lumière de fluorescence.

2. Procédé selon la revendication 1, dans lequel l'échantillon est disposé au contact de la couche mince, ou à une distance de cette dernière inférieure à 1 mm.

3. Procédé selon l'une quelconque des revendications précédentes, dans lequel

   - le premier cristal photonique (31) est monodimensionnel, les premières inclusions (22) s'étendant parallèlement à un axe latéral (Y) perpendiculaire à l'axe longitudinal ;
   - et/ou le deuxième cristal photonique (32) est monodimensionnel, les deuxièmes inclusions (23) s'étendant parallèlement l'axe latéral.

4. Procédé selon l'une quelconque des revendications 1 ou 2, dans lequel

   - le premier cristal photonique (31) est bidimensionnel, les premières inclusions (22) étant également espacées les unes des autres, selon un axe latéral (Y) perpendiculaire à l'axe longitudinal ;
   - et/ou le deuxième cristal photonique est bidimensionnel (32), les deuxièmes inclusions (23) étant également espacées les unes des autres, selon l'axe latéral.

5. Procédé selon l'une quelconque des revendications précédentes, dans lequel :

   - la première période ($P_{1X}$), parallèlement à l'axe longitudinal, est comprise entre 100 nm et 300 nm ;
   - et/ou la deuxième période ($P_{2X}$), parallèlement à l'axe longitudinal, est comprise entre 200 nm et 400 nm.

6. Procédé selon l'une quelconque des revendications précédentes, dans lequel l'épaisseur ($\varepsilon$) de la couche mince (21), selon l'axe de propagation, est comprise entre 100 nm et 300 nm.

7. Procédé selon l'une quelconque des revendications précédentes, dans lequel le support (20) est disposé entre l'échantillon (2) et le capteur d'image (40).

8. Procédé selon la revendication 7, dans lequel aucune optique de formation d'image n'est disposée entre le capteur d'image (40) et le support (20).

9. Procédé selon l'une quelconque des revendications précédentes, dans lequel le troisième matériau, formant les deuxièmes inclusions (23) est identique au deuxième matériau, formant les premières inclusions (22).

10. Dispositif (1) d'observation d'un échantillon fluorescent (2), l'échantillon comportant un agent fluorescent émettant une lumière de fluorescence, dans une bande spectrale de fluorescence ($\lambda_f$) lorsqu'il est illuminé par une lumière d'excitation, dans une bande spectrale d'excitation ($\lambda_e$), le dispositif comportant :

    - une source de lumière (10), configurée pour émettre une onde lumineuse d'illumination (12) dans la bande spectrale d'excitation, la lumière se propageant, vers l'échantillon, selon un axe de propagation (Z);
    - un capteur d'image (40), configuré pour détecter une lumière de fluorescence (16), émise par l'échantillon, dans la bande spectrale de fluorescence ;
    - un support d'échantillon (20), configuré pour recevoir l'échantillon, le support étant disposé entre la source de lumière et le capteur d'image,
    - le dispositif étant **caractérisé en ce que** :
    le support comporte une couche mince (21) formée d'un premier matériau, d'un premier indice de réfraction ($n_1$), la couche mince s'étendant selon un plan de support ($P_{20}$), , perpendiculaire à l'axe de propagation (Z), le plan du support s'étendant selon un axe longitudinal (X), la couche mince comportant :

        - des premières inclusions (22) formées d'un deuxième matériau, d'un deuxième indice de réfraction ($n_2$), différent du premier indice de réfraction ($n_1$), les premières inclusions définissant un premier motif périodique, les premières inclusions étant réparties selon une première période ($P_{1X}$), parallèlement à l'axe longitudinal (X), les premières inclusions formant un premier cristal photonique (31) résonant dans la bande spectrale d'excitation ($\lambda_e$), le premier cristal photonique étant configuré pour confiner une partie de l'onde lumineuse d'illumination (12) dans la couche mince (21) ;
        - des deuxièmes inclusions (23), formées d'un troisième matériau, d'un troisième indice de réfraction ($n_3$), différent du premier indice de réfraction, et formant un deuxième motif périodique, les deuxièmes inclusions étant réparties selon une deuxième période ($P_{2X}$), parallèlement à l'axe longitudinal, la deuxième période étant strictement supérieure à la première période, les deuxièmes inclusions formant un deuxième cristal photonique (32) résonant dans la bande spectrale de fluorescence ($\lambda_e$);
- au moins deux deuxièmes cristaux photoniques (32) étant disposés de part et d'autre d'un premier cristal photonique (31).

**11.** Dispositif selon la revendication 10, dans lequel :

- le premier cristal photonique (31) est monodimensionnel, les premières inclusions (22) s'étendant parallèlement à un axe latéral (Y) perpendiculaire à l'axe longitudinal (X) ;
- et/ou le deuxième cristal photonique (32) est monodimensionnel, les deuxièmes inclusions (23) s'étendant parallèlement l'axe latéral (Y).

**12.** Dispositif selon la revendication 10, dans lequel :

- le premier cristal photonique (31) est bidimensionnel, les premières inclusions (22) étant espacées les unes des autres, selon un axe latéral (Y) perpendiculaire à l'axe longitudinal (X);
- et/ou le deuxième cristal photonique (32) est bidimensionnel, les deuxièmes inclusions (23) étant espacées les unes des autres, selon l'axe latéral (Y).

**13.** Dispositif selon l'une quelconque des revendications 10 à 12, dans lequel :

- la première période ($P_{1X}$), parallèlement à l'axe longitudinal, est comprise entre 100 nm et 300 nm ;
- et/ou la deuxième période ($P_{2X}$) est comprise entre 200 nm et 400 nm.

**14.** Dispositif selon l'une quelconque des revendications 10 à 13, dans lequel aucune optique de formation d'image ne s'étend entre le support (20) et le capteur d'image (40).

**15.** Dispositif selon la revendication 14, dans lequel le support (20) et le capteur d'image (40) forment un même composant.


**Patentansprüche**

**1.** Verfahren zur Beobachtung einer fluoreszierenden Probe (2), wobei die Probe einen fluoreszierenden Wirkstoff aufweist, der ein Fluoreszenzlicht in einem Fluoreszenz-Spektralband ($\lambda_f$) emittiert, wenn er von einem Anregungslicht in einem Anregungs-Spektralband ($\lambda_e$) beleuchtet wird, wobei das Verfahren die folgenden Schritte aufweist:

a) Anordnung der Probe gegen einen Träger (20);
b) Beleuchtung der Probe durch eine Lichtquelle (10) im Anregungs-Spektralband ($\lambda_e$), wobei das von der Lichtquelle emittierte Licht (12) sich gemäß einer Ausbreitungsachse (Z) ausbreitet;
c) Erfassung eines Fluoreszenzlichts (16) im Fluoreszenz-Spektralband durch einen Bildsensor (40);

wobei das Verfahren so ist, dass der Träger zwischen der Lichtquelle und dem Bildsensor angeordnet ist, wobei das Verfahren **dadurch gekennzeichnet ist, dass** der Träger eine aus einem ersten Material gebildete Dünnschicht (21) mit einem ersten Brechungsindex ($n_1$) aufweist, wobei die Dünnschicht sich gemäß einer Trägerebene ($P_{20}$) lotrecht zur Ausbreitungsachse (Z) erstreckt, wobei die Trägerebene sich gemäß einer Längsachse (X) erstreckt, wobei die Dünnschicht aufweist:

- erste Einschlüsse (22), die aus einem zweiten Material gebildet sind, mit einem zweiten Brechungsindex ($n_2$) anders als der erste Brechungsindex ($n_1$), wobei die ersten Einschlüsse ein erstes periodisches Muster definieren, wobei die ersten Einschlüsse gemäß einer ersten Periode ($P_{1X}$) parallel zur Längsachse (X) verteilt sind, wobei die ersten Einschlüsse einen ersten resonanten photonischen Kristall (31) im Anregungs-Spektralband ($\lambda_e$) bilden;
- zweite Einschlüsse (23), die aus einem dritten Material mit einem dritten Brechungsindex ($n_3$) anders als der erste Brechungsindex gebildet werden und ein zweites periodisches Muster bilden, wobei die zweiten Einschlüsse gemäß einer zweiten Periode ($P_{2x}$) parallel zur Längsachse verteilt sind, wobei die zweite Periode strikt größer ist als die erste Periode, wobei die zweiten Einschlüsse einen zweiten resonanten photonischen Kristall (32) im Fluoreszenz-Spektralband ($\lambda_f$) bilden;
- wobei mindestens zwei zweite photonische Kristalle (32) zu beiden Seiten eines ersten photonischen Kristalls (31) angeordnet sind;

derart, dass:

- ein Teil des von der Lichtquelle (10) auf der Anregungswellenlänge emittierten Lichts in der Dünnschicht (21) unter der Wirkung des ersten photonischen Kristalls eingeschlossen wird, was zu einer Verstärkung einer Lichtwelle führt, die sich im Bereich einer Schnittstelle zwischen der Dünnschicht (21) und der Probe (2) ausbreitet;
- das Fluoreszenzlicht (16) sich in der Dünnschicht (21) durch einen ersten photonischen Kristall (31) hindurch ausbreitet, indem es von den zweiten photonischen Kristallen (32) reflektiert wird, die zu beiden Seiten des ersten photonischen Kristalls angeordnet sind, was zu einer Verstärkung des Fluoreszenzlichts führt.

2. Verfahren nach Anspruch 1, wobei die Probe in Kontakt mit der Dünnschicht oder in einem Abstand von dieser von weniger als 1 mm angeordnet ist.

3. Verfahren nach einem der vorhergehenden Ansprüche, wobei

   - der erste photonische Kristall (31) eindimensional ist, wobei die ersten Einschlüsse (22) sich parallel zu einer Querachse (Y) lotrecht zur Längsachse erstrecken;
   - und/oder der zweite photonische Kristall (32) eindimensional ist, wobei die zweiten Einschlüsse (23) sich parallel zur Querachse erstrecken.

4. Verfahren nach einem der Ansprüche 1 oder 2, wobei

   - der erste photonische Kristall (31) zweidimensional ist, wobei die ersten Einschlüsse (22) ebenfalls gemäß einer Querachse (Y) lotrecht zur Längsachse zueinander beabstandet sind;
   - und/oder der zweite photonische Kristall (32) zweidimensional ist, wobei die zweiten Einschlüsse (23) ebenfalls gemäß der Querachse zueinander beabstandet sind.

5. Verfahren nach einem der vorhergehenden Ansprüche, wobei:

   - die erste Periode ($P_{1X}$) parallel zur Längsachse zwischen 100 nm und 300 nm liegt;
   - und/oder die zweite Periode ($P_{2X}$) parallel zur Längsachse zwischen 200 nm und 400 nm liegt.

6. Verfahren nach einem der vorhergehenden Ansprüche, wobei die Dicke ($\varepsilon$) der Dünnschicht (21) gemäß der Ausbreitungsachse zwischen 100 nm und 300 nm liegt.

7. Verfahren nach einem der vorhergehenden Ansprüche, wobei der Träger (20) zwischen der Probe (2) und dem Bildsensor (40) angeordnet ist.

8. Verfahren nach Anspruch 7, wobei keine Bilderzeugungsoptik zwischen dem Bildsensor (40) und dem Träger (20) angeordnet ist.

9. Verfahren nach einem der vorhergehenden Ansprüche, wobei das die zweiten Einschlüsse (23) bildende dritte Material gleich dem zweiten Material ist, das die ersten Einschlüsse (22) bildet.

10. Vorrichtung (1) zur Beobachtung einer fluoreszierenden Probe (2), wobei die Probe einen fluoreszierenden Wirkstoff aufweist, der ein Fluoreszenzlicht in einem Fluoreszenz-Spektralband ($\lambda_f$) emittiert, wenn er von einem Anregungslicht in einem Anregungs-Spektralband ($\lambda_e$) beleuchtet wird, wobei die Vorrichtung aufweist:

    - eine Lichtquelle (10), die konfiguriert ist, eine Beleuchtungslichtwelle (12) im Anregungs-Spektralband zu emittieren, wobei das Licht sich gemäß einer Ausbreitungsachse (Z) zur Probe ausbreitet;
    - einen Bildsensor (40), der konfiguriert ist, ein von der Probe im Fluoreszenz-Spektralband emittiertes Fluoreszenzlicht (16) zu erfassen;
    - einen Probenträger (20), der konfiguriert ist, die Probe zu empfangen, wobei der Träger zwischen der Lichtquelle und dem Bildsensor angeordnet ist,

    wobei die Vorrichtung **dadurch gekennzeichnet ist, dass**:
    der Träger eine aus einem ersten Material gebildete Dünnschicht (21) mit einem ersten Brechungsindex ($n_1$) aufweist, wobei die Dünnschicht sich gemäß einer Trägerebene ($P_{20}$) lotrecht zur Ausbreitungsachse (Z) erstreckt, wobei die Ebene des Trägers sich gemäß einer Längsachse (X) erstreckt, wobei die Dünnschicht aufweist:

    - erste Einschlüsse (22), die aus einem zweiten Material gebildet sind, mit einem zweiten Brechungsindex ($n_2$) anders als der erste Brechungsindex ($n_1$), wobei die ersten Einschlüsse ein erstes periodisches Muster definieren, wobei die ersten Einschlüsse gemäß einer ersten Periode ($P_{1X}$) parallel zur Längsachse (X) verteilt sind, wobei die ersten Einschlüsse einen ersten resonanten photonischen Kristall (31) im Anregungs-Spektralband ($\lambda_e$) bilden, wobei der erste photonische Kristall konfiguriert ist, einen Teil der Beleuchtungslichtwelle (12) in der Dünnschicht (21) einzuschließen;
    - zweite Einschlüsse (23), die aus einem dritten Material gebildet sind, mit einem dritten Brechungsindex ($n_3$) anders als der erste Brechungsindex, und ein zweites periodisches Muster bilden, wobei die zweiten Einschlüsse gemäß einer zweiten Periode ($P_{2X}$) parallel zur Längsachse verteilt sind, wobei die zweite Periode strikt größer ist als die erste Periode, wobei die zweiten Einschlüsse einen zweiten resonanten photonischen Kristall (32) im Fluoreszenz-Spektralband ($\lambda_f$) bilden;
    - wobei mindestens zwei zweite photonische Kristalle (32) zu beiden Seiten eines ersten photonischen Kristalls (31) angeordnet sind.

**11.** Vorrichtung nach Anspruch 10, wobei:

- der erste photonische Kristall (31) eindimensional ist, wobei die ersten Einschlüsse (22) sich parallel zu einer Querachse (Y) lotrecht zur Längsachse (X) erstrecken;
- und/oder der zweite photonische Kristall (32) eindimensional ist, wobei die zweiten Einschlüsse (23) sich parallel zur Querachse (Y) erstrecken.

**12.** Vorrichtung nach Anspruch 10, wobei:

- der erste photonische Kristall (31) zweidimensional ist, wobei die ersten Einschlüsse (22) gemäß einer Querachse (Y) lotrecht zur Längsachse (X) zueinander beabstandet sind;
- und/oder der zweite photonische Kristall (32) zweidimensional ist, wobei die zweiten Einschlüsse (23) gemäß der Querachse (Y) zueinander beabstandet sind.

**13.** Vorrichtung nach einem der Ansprüche 10 bis 12, wobei:

- die erste Periode ($P_{1X}$) parallel zur Längsachse zwischen 100 nm und 300 nm liegt;
- und/oder die zweite Periode ($P_{2X}$) zwischen 200 nm und 400 nm liegt.

**14.** Vorrichtung nach einem der Ansprüche 10 bis 13, wobei keine Bilderzeugungsoptik sich zwischen dem Träger (20) und dem Bildsensor (40) erstreckt.

**15.** Vorrichtung nach Anspruch 14, wobei der Träger (20) und der Bildsensor (40) ein gleiches Bauteil bilden.

**Claims**

**1.** Method for observing a fluorescent sample (2), the sample comprising a fluorescent agent that emits fluorescence light, in a fluorescence spectral band ($\lambda_f$), when it is illuminated by excitation light, in an excitation spectral band ($\lambda_e$), the method comprising the following steps:

a) placing the sample against a holder (20);
b) illuminating the sample, with a light source (10), in the excitation spectral band ($\lambda_e$), the light (12) emitted by the light source propagating along a propagation axis (Z);
c) detecting fluorescence light (16), in the fluorescence spectral band, with an image sensor (40);

the method being such that the holder is placed between the light source and the image sensor, the method being **characterized in that** the holder comprises a thin layer (21) formed from a first material, of a first refractive index ($n_1$), the thin layer lying in a holder plane ($P_{20}$) perpendicular to the propagation axis (Z), the holder plane extending along a longitudinal axis (X), the thin layer comprising:

- first inclusions (22) formed from a second material, of a second refractive index ($n_2$) different from the first refractive index ($n_1$), the first inclusions defining a first periodic pattern, the first inclusions being distributed with a first period (Pix), parallel to the longitudinal axis (X), the first inclusions forming a first photonic crystal (31) that is resonant in the excitation spectral band ($\lambda_e$);
- second inclusions (23) formed from a third material, of a third refractive index ($n_3$) different from the first refractive index, and forming a second periodic pattern, the second inclusions being distributed with a second period ($P_{2X}$), parallel to the longitudinal axis, the second period being strictly longer than the first period, the second inclusions forming a second photonic crystal (32) that is resonant in the fluorescence spectral band ($\lambda_f$);
- at least two second photonic crystals (32) being placed on either side of a first photonic crystal (31);

such that:

- some of the light emitted by the light source (10), at the excitation wavelength, is confined in the thin layer (21), under the effect of the first photonic crystal, resulting in an amplification of a light wave that propagates at an interface between the thin layer (21) and the sample (2);
- the fluorescence light (16) propagates in the thin layer (21), through a first photonic crystal (31), while being reflected by the second photonic crystals (32) placed on either side of the first photonic crystal, resulting in an amplification of the fluorescence light.

**2.** Method according to Claim 1, wherein the sample is placed in contact with the thin layer, or at a distance from the latter smaller than 1 mm.

**3.** Method according to either one of the preceding claims, wherein

- the first photonic crystal (31) is one-dimensional, the first inclusions (22) extending parallel to a lateral axis (Y) perpendicular to the longitudinal axis;
- and/or the second photonic crystal (32) is one-dimensional, the second inclusions (23) extending parallel to the lateral axis.

4. Method according to either one of Claims 1 and 2, wherein

- the first photonic crystal (31) is two-dimensional, the first inclusions (22) being equally spaced apart from one another, along a lateral axis (Y) perpendicular to the longitudinal axis;
- and/or the second photonic crystal (32) is two-dimensional, the second inclusions (23) being equally spaced apart from one another, along the lateral axis.

5. Method according to any one of the preceding claims, wherein:

- the first period (Pix), parallel to the longitudinal axis, is comprised between 100 nm and 300 nm;
- and/or the second period ($P_{2X}$), parallel to the longitudinal axis, is comprised between 200 nm and 400 nm.

6. Method according to any one of the preceding claims, wherein the thickness ($\varepsilon$) of the thin layer (21), along the propagation axis, is comprised between 100 nm and 300 nm.

7. Method according to any one of the preceding claims, wherein the holder (20) is placed between the sample (2) and the image sensor (40).

8. Method according to Claim 7, wherein no image-forming optics are placed between the image sensor (40) and the holder (20).

9. Method according to any one of the preceding claims, wherein the third material, forming the second inclusions (23), is identical to the second material, forming the first inclusions (22).

10. Device (1) for observing a fluorescent sample (2), the sample comprising a fluorescent agent that emits fluorescence light, in a fluorescence spectral band ($\lambda_f$), when it is illuminated by excitation light, in an excitation spectral band ($\lambda_e$), the device comprising:

- a light source (10), configured to emit an illuminating light wave (12) in the excitation spectral band, the light propagating, toward the sample, along a propagation axis (Z);
- an image sensor (40), configured to detect fluorescence light (16), emitted by the sample, in the fluorescence spectral band;
- a sample holder (20), configured to receive the sample, the holder being placed between the light source and the image sensor;

- the device being **characterized in that**:
the holder comprises a thin layer (21) formed from a first material, of a first refractive index ($n_1$), the thin layer lying in a holder plane ($P_{20}$) perpendicular to the propagation axis (Z), the holder plane extending along a longitudinal axis (X), the thin layer comprising:

- first inclusions (22) formed from a second material, of a second refractive index ($n_2$) different from the first refractive index ($n_1$), the first inclusions defining a first periodic pattern, the first inclusions being distributed with a first period (Pix), parallel to the longitudinal axis (X), the first inclusions forming a first photonic crystal (31) that is resonant in the excitation spectral band ($\lambda_e$), the first photonic crystal being configured to confine a portion of the illumination light wave (12) in the thin layer (21);
- second inclusions (23) formed from a third material, of a third refractive index ($n_3$) different from the first refractive index, and forming a second periodic pattern, the second inclusions being distributed with a second period ($P_{2X}$), parallel to the longitudinal axis, the second period being strictly longer than the first period, the second inclusions forming a second photonic crystal (32) that is resonant in the fluorescence spectral band ($\lambda_e$);
- at least two second photonic crystals (32) being placed on either side of a first photonic crystal (31).

11. Device according to Claim 10, wherein:

- the first photonic crystal (31) is one-dimensional, the first inclusions (22) extending parallel to a lateral axis (Y) perpendicular to the longitudinal axis (X);
- and/or the second photonic crystal (32) is one-dimensional, the second inclusions (23) extending parallel to the lateral axis (Y).

12. Device according to Claim 10, wherein:

- the first photonic crystal (31) is two-dimensional, the first inclusions (22) being spaced apart from one another, along a lateral axis (Y) perpendicular to the longitudinal axis (X);
- and/or the second photonic crystal (32) is two-dimensional, the second inclusions (23) being spaced apart from one another, along the lateral axis (Y).

13. Device according to any one of Claims 10 to 12, wherein:

- the first period (Pix), parallel to the longitudinal axis, is comprised between 100 nm and 300 nm;
- and/or the second period ($P_{2x}$) is comprised between 200 nm and 400 nm.

14. Device according to any one of Claims 10 to 13, wherein no image-forming optics lie between the holder (20) and the image sensor (40).

15. Device according to Claim 14, wherein the holder (20) and the image sensor (40) form the same component.

**Fig. 1A**

**Fig. 1B**

**Fig. 1C**

**Fig. 1D**

**Fig. 1E**

**Fig. 2A**

**Fig. 2B**

**Fig. 2C**

**Fig. 3A**

**Fig. 3B**

**Fig. 3C**

**Fig. 4A**

**Fig. 4B**

**Fig. 4C**

**Fig. 5A**

**Fig. 5B**

**Fig. 5C**

**Fig. 6**

X

Z

20

**Fig. 7A**

X

Z

SiN

20

**Fig. 7B**

X

Z

R

SiN

20

**Fig. 7C**

**Fig. 7D**

**Fig. 7E**

**Fig. 7F**

X

Z

SiO$_2$

SiN

20

**Fig. 7G**

X

Z

SiO$_2$

SiN

20

**Fig. 7H**

**RÉFÉRENCES CITÉES DANS LA DESCRIPTION**

**Documents brevets cités dans la description**

- WO 2008136812 A